# EUROPÄISCHE PATENTSCHRIFT

(11) **EP 3 275 654 B1**
(45) Veröffentlichungstag und Bekanntmachung des Hinweises auf die Patenterteilung: **22.12.2021**
(21) Anmeldenummer: 17178262.6
(22) Anmeldetag: 28.06.2017
(51) Int. Cl.: B33Y 10/00, B33Y 30/00, B29C 64/153, B29C 64/218, B29C 64/214, B29C 64/241, B22F 3/105, B22F 12/00, B22F 10/20

(54) **BESCHICHTUNGSEINHEIT, BESCHICHTUNGSVERFAHREN, VORRICHTUNG UND VERFAHREN ZUM GENERATIVEN HERSTELLEN EINES DREIDIMENSIONALEN OBJEKTS**
COATING UNIT, COATING METHOD, METHOD AND DEVICE FOR GENERATING A THREE-DIMENSIONAL OBJECT
UNITÉ DE REVÊTEMENT, PROCÉDÉ DE REVÊTEMENT, DISPOSITIF ET PROCÉDÉ ET DISPOSITIF DE FABRICATION ADDITIVE D'UN OBJET TRIDIMENSIONNEL

(30) Priorität: 30.06.2016 DE 102016211952
(43) Veröffentlichungstag der Anmeldung: 31.01.2018
(73) Patentinhaber: EOS GmbH Electro Optical Systems, 82152 Krailling (DE)
(72) Erfinder: PATERNOSTER, Stefan, 82346 Andechs (DE); GRÜNBERGER, Stefan, 81739 München (DE)
(74) Vertreter: Prüfer & Partner mbB Patentanwälte · Rechtsanwälte

(56) Entgegenhaltungen:
- WO-A1-2015/082677
- US-A- 5 786 562
- US-A1- 2002 195 747
- US-A1- 2008 156 263
- US-A1- 2012 164 322
- US-A1- 2015 139 849

## Beschreibung

Die vorliegende Erfindung bezieht sich auf eine Vorrichtung und ein Verfahren zum generativen Herstellen eines dreidimensionalen Objekts durch schichtweises Aufbringen und selektives Verfestigen eines Aufbaumaterials, vorzugsweise eines Pulvers, insbesondere auf eine in der Vorrichtung enthaltene und für das Verfahren verwendete Beschichtungseinheit bzw. ein entsprechendes Beschichtungsverfahren.

Vorrichtungen und Verfahren dieser Art werden beispielsweise beim Rapid Prototyping, Rapid Tooling oder Additive Manufacturing verwendet. Ein Beispiel eines solchen Verfahrens ist unter dem Namen "Selektives Lasersintern oder Laserschmelzen" bekannt. Dabei wird wiederholt eine dünne Schicht eines pulverförmigen Aufbaumaterials aufgebracht und das Aufbaumaterial in jeder Schicht durch selektives Bestrahlen von einem Querschnitt des herzustellenden Objekts entsprechenden Stellen mit einem Laserstrahl selektiv verfestigt.

WO 2013/092757 A1 beschreibt eine Vorrichtung und ein Verfahren zum generativen Herstellen eines dreidimensionalen Objekts aus Pulver. In einer Ausführungsform wird das Pulver über eine Pulverzufuhr, die eine Dosierwalze enthält und über ein Baufeld verfährt, auf das Baufeld aufgetragen. Das aufgebrachte Pulver wird von einer hinter der Pulverzufuhr fahrenden höhenverstellbaren Verteilungswalze zu einer gleichmäßigen Schicht ausgezogen und durch eine nachfolgende Verdichtungswalze, die näher an dem Baufeld angeordnet ist als die Verteilungswalze, verdichtet, wobei die Schichtdicke verringert wird. Die Beschichtungsrichtung ist durch die Abfolge der Walzen fest vorgegeben.

Die WO 205/082677 A1 betrifft eine Vorrichtung zum Schichtauftrag mit einer Einrichtung zur Verteilung eines Pulvers, die eine Pulverzuführung sowie Mittel zum Schichtauszug sowie deren Glättung umfasst.

Die Aufgabe der vorliegenden Erfindung besteht darin, eine alternative bzw. verbesserte Beschichtungseinheit bzw. Herstellungsvorrichtung bzw. ein alternatives bzw. verbessertes Beschichtungs- bzw. Herstellungsverfahren für ein dreidimensionales Objekt durch schichtweises Aufbringen und selektives Verfestigen eines Aufbaumaterials bereitzustellen, bei denen insbesondere die Beschichtungsrichtung einfach verändert werden kann.

Diese Aufgabe wird gelöst durch eine Beschichtungseinheit gemäß Anspruch 1, einen Beschichter gemäß Anspruch 7, eine Herstellvorrichtung gemäß Anspruch 9, ein Beschichtungsverfahren gemäß Anspruch 12 und ein Herstellungsverfahren gemäß Anspruch 15.

Weiterbildungen der Erfindung sind jeweils in den Unteransprüchen angegeben. Dabei können die Verfahren auch durch die untenstehenden bzw. in den Unteransprüchen ausgeführten Merkmale der Vorrichtungen weitergebildet sein oder umgekehrt, bzw. die Merkmale der Vorrichtungen bzw. der Verfahren können auch jeweils untereinander zur Weiterbildung genutzt werden.

Die erfindungsgemäße Beschichtungseinheit dient zum Ausund/oder Nachrüsten einer Vorrichtung zum generativen Herstellen eines dreidimensionalen Objekts durch selektives schichtweises Verfestigen eines Aufbaumaterials, vorzugsweise eines Pulvers, wobei die Vorrichtung einen über ein Baufeld bewegbaren Beschichter zum Aufbringen einer Schicht des Aufbaumaterials innerhalb des Baufelds und eine Verfestigungsvorrichtung zum selektiven Verfestigen der aufgebrachten Schicht an Stellen, die einem Querschnitt des herzustellenden Objekts entsprechen, enthält und dazu ausgebildet und/oder gesteuert ist, die Schritte des Aufbringens und des selektiven Verfestigens zu wiederholen, bis das Objekt fertiggestellt ist. Die Beschichtungseinheit enthält zumindest zwei in einer ersten Richtung voneinander beabstandete und sich in eine zweite Richtung quer, vorzugsweise senkrecht zu der ersten Richtung erstreckende Beschichtungswalzen und ein in der ersten Richtung zwischen den beiden Beschichtungswalzen angeordnetes und sich in der zweiten Richtung erstreckendes Verdichtungs- und/oder Glättungselement. Die Beschichtungseinheit ist dazu eingerichtet, je nach Bewegung der Beschichtungseinheit in die erste Richtung oder in ihre Gegenrichtung Aufbaumaterial mit der in der jeweiligen Bewegungsrichtung vorlaufenden Beschichtungswalze zu einer gleichmäßigen Schicht auszuziehen und die von der vorlaufenden Beschichtungswalze ausgezogene Schicht mit dem Verdichtungsund/oder Glättungselement zu verdichten und/oder zu glätten. Mit einer solchen Beschichtungseinheit können beispielsweise Aufbringen und Verdichten und/oder Glätten einer Materialschicht voneinander getrennt jeweils durch eigene Elemente bewirkt werden, wobei die Beschichtungseinheit aber dennoch in einander entgegengesetzten Beschichtungsrichtungen verwendet werden kann.

Vorzugsweise ist das Verdichtungs- und/oder Glättungselement in der ersten Richtung im Wesentlichen mittig zwischen den beiden Beschichtungswalzen angeordnet. Weiterhin bevorzugt ist es in der ersten Richtung im Wesentlichen unsymmetrisch gebildet oder es ist in der ersten Richtung im Wesentlichen spiegelsymmetrisch gebildet. Dadurch kann beispielsweise die Verdichtungsund/oder Glättungswirkung gut an die jeweiligen Anforderungen angepasst werden.

Vorzugsweise ist das Verdichtungs- und/oder Glättungselement eine sich in der zweiten und eine senkrecht zu der ersten und der zweiten Richtung verlaufende dritte Richtung erstreckende Klinge (alternativ auch eine Walze, die besonders bevorzugt drehbar, beispielsweise mittels eines Aktors und/oder indirekt hervorgerufen durch die Bewegung der Beschichtungseinheit angetrieben, gelagerte Walze), die an ihrer in der dritten Richtung gelegenen in Richtung des Baufelds weisenden Unterseite zumindest eine geneigte Verdichtungs- und/oder Glättungsfläche und/oder eine Abrundung, vorzugsweise in Form eines Zylindersegments und/oder eines dachförmigen Elements, zum Verdichten und/oder Glätten der Schicht aufweist. Eine solche Klinge ist beispielsweise ein einfach zu realisierendes Verdichtungsund/oder Glättungselement, und mit der entsprechenden Klingengeometrie kann beispielsweise die Verdichtungs- und/oder Glättungswirkung an die jeweiligen Anforderungen angepasst werden.

Vorzugsweise ist das Verdichtungs- und/oder Glättungselement austauschbar in der Beschichtungseinheit angeordnet. Dadurch kann das Verdichtungs- und/oder Glättungselement beispielsweise zu Reinigungs- und/oder Wartungsarbeiten leicht aus der Beschichtungseinheit entnommen und/oder bei Beschädigung leicht ersetzt werden, und es kann für jeden Baujob jeweils ein an die Anforderungen des jeweiligen Baujobs angepasstes Verdichtungsund/oder Glättungselement verwendet werden.

Vorzugsweise ist das Verdichtungs- und/oder Glättungselement in der dritten Richtung manuell und/oder automatisch verstellbar in der Beschichtungseinheit angeordnet. Dadurch kann beispielsweise eine Höhe des Verdichtungs- und/oder Glättungselement über dem Baufeld leicht an die Anforderungen des jeweiligen Baujobs angepasst werden.

Vorzugsweise weisen die beiden Beschichtungswalzen denselben Durchmesser auf und/oder sind in einem zueinander entgegengesetzten Drehsinn antreibbar in der Beschichtungseinheit angeordnet. Dadurch kann jeweils beispielsweise einfach ein symmetrisches Verhalten in einander entgegengesetzten Beschichtungsrichtungen erzielt werden.

Der erfindungsgemäße Beschichter dient zum Aus- und/oder Nachrüsten einer Vorrichtung zum Herstellen eines dreidimensionalen Objekts durch selektives schichtweises Verfestigen von Aufbaumaterial, vorzugsweise eines Pulvers, wobei die Vorrichtung daran angepasst ist, den Beschichter so aufzunehmen, dass er über ein Baufeld bewegbar ist zum Aufbringen einer Schicht des Aufbaumaterials innerhalb des Baufelds, eine Verfestigungsvorrichtung zum selektiven Verfestigen der aufgebrachten Schicht an Stellen, die einem Querschnitt des herzustellenden Objekts entsprechen, enthält und dazu ausgebildet und/oder gesteuert ist, die Schritte des Aufbringens und des selektiven Verfestigens zu wiederholen, bis das Objekt fertiggestellt ist. Der Beschichter enthält eine erfindungsgemäße Beschichtungseinheit. Mit einem solchen Beschichter können beispielsweise Aufbringen und Verdichten und/oder Glätten einer Materialschicht voneinander getrennt jeweils durch eigene Elemente bewirkt werden, wobei der Beschichter aber dennoch in einander entgegengesetzten Beschichtungsrichtungen verwendet werden kann.

Vorzugsweise ist die in dem Beschichter enthaltene Beschichtungseinheit ein auswechselbares Beschichtungsmodul. Dadurch kann beispielsweise der Beschichter einfach an unterschiedliche Beschichtungsanforderungen je nach Art des verwendeten Materials und/oder der gewünschten Schichtdicke angepasst werden.

Die erfindungsgemäße Vorrichtung zum generativen Herstellen eines dreidimensionalen Objekts durch schichtweises selektives Verfestigen eines Aufbaumaterials, vorzugsweise eines Pulvers, umfasst einen über ein Baufeld bewegbaren Beschichter zum Aufbringen einer Schicht des Aufbaumaterials innerhalb des Baufelds und eine Verfestigungsvorrichtung zum selektiven Verfestigen der aufgebrachten Schicht an Stellen, die einem Querschnitt des herzustellenden Objekts entsprechen. Die Vorrichtung ist ausgebildet und/oder gesteuert, die Schritte des Aufbringens und des selektiven Verfestigens zu wiederholen, bis das Objekt fertiggestellt ist. Der Beschichter ist als erfindungsgemäßer Beschichter ausgebildet. Mit einer solchen Herstellvorrichtung können beispielsweise Aufbringen und Verdichten und/oder Glätten einer Materialschicht voneinander getrennt jeweils durch eigene Elemente bewirkt werden, wobei der Beschichter aber dennoch in einander entgegengesetzten Beschichtungsrichtungen verwendet werden kann.

Vorzugsweise enthält die Vorrichtung ferner eine Einrichtung zum Auftragen von Aufbaumaterial in der jeweiligen Bewegungsrichtung vor der vorlaufenden Walze. Dadurch kann beispielsweise das Aufbringen des zum Aufbau des Objekts dienenden Materials auf das Baufeld unabhängig von der Beschichtungseinheit durchgeführt werden.

Vorzugsweise ist die Beschichtungseinheit so in der Vorrichtung angeordnet, dass die erste Richtung die Bewegungsrichtung des Beschichters über das Baufeld ist und die dritte Richtung die Vertikale senkrecht zum Baufeld ist. Dadurch kann beispielsweise das zum Aufbau des Objekts dienende Material in einer Richtung quer zu der Beschichtungseinheit zu einer Schicht ausgezogen werden, und die vertikale Höheneinstellungen der Beschichtungswalzen und/oder des Verdichtungs- und/oder Glättungselement kann geändert werden.

Das erfindungsgemäße Beschichtungsverfahren erfolgt in einer Vorrichtung zum generativen Herstellen eines dreidimensionalen Objekts durch selektives schichtweises Verfestigen eines Aufbaumaterials, vorzugsweise eines Pulvers, wobei die Vorrichtung einen über ein Baufeld bewegbaren Beschichter zum Aufbringen einer Schicht des Aufbaumaterials innerhalb des Baufelds und eine Verfestigungsvorrichtung zum selektiven Verfestigen der aufgebrachten Schicht an Stellen, die einem Querschnitt des herzustellenden Objekts entsprechen, enthält und dazu ausgebildet und/oder gesteuert ist, die Schritte des Aufbringens und des selektiven Verfestigens zu wiederholen, bis das Objekt fertiggestellt ist. Das Beschichtungsverfahren erfolgt mittels einer Beschichtungseinheit, die zumindest zwei in einer ersten Richtung voneinander beabstandete und sich in eine zweite Richtung quer, vorzugsweise senkrecht zu der ersten Richtung erstreckende Beschichtungswalzen und eine in der ersten Richtung zwischen den beiden Beschichtungswalzen angeordnete und sich in der zweiten und eine senkrecht zu der ersten und der zweiten Richtung verlaufende dritte Richtung erstreckende Verdichterklinge enthält. Die Beschichtungseinheit zieht je nach Bewegung der Beschichtungseinheit in die erste Richtung oder in ihre Gegenrichtung Aufbaumaterial mit der in der jeweiligen Bewegungsrichtung vorlaufenden Beschichtungswalze zu einer gleichmäßigen Schicht aus und verdichtet und/oder glättet die von der vorlaufenden Beschichtungswalze ausgezogene Schicht mit dem Verdichtungs- und/oder Glättungselement. Mit einem solchen Beschichtungsverfahren können beispielsweise Aufbringen und Verdichten und/oder Glätten einer Materialschicht voneinander getrennt jeweils durch eigene Elemente bewirkt werden, wobei die Beschichtung aber dennoch in einander entgegengesetzten Beschichtungsrichtungen durchgeführt werden kann.

Eine dem Baufeld zugewandte Unterseite des Verdichtungs- und/oder Glättungselements wird näher an dem Baufeld angeordnet als dem Baufeld zugewandte Unterseiten der beiden Beschichtungswalzen. Dadurch kann die jeweils vorlaufende Beschichtungswalze das Aufbaumaterial zu einer gleichmäßigen Schicht ausziehen, während das Verdichtungs- und/oder Glättungselements die Schichtdicke der ausgezogenen Schicht verringert und/oder das Aufbaumaterial weiter glättet und/oder verdichtet, und es können gleiche Eigenschaften in einander entgegengesetzten Beschichtungsrichtungen erzielt werden.

Vorzugsweise wird der Drehsinn jeder Beschichtungswalze so gewählt, dass jede Beschichtungswalze, wenn sie die in der jeweiligen Bewegungsrichtung vorlaufende Beschichtungswalze ist, gegenläufig zu der jeweiligen Bewegungsrichtung gedreht wird.

Dadurch kann beispielsweise ein möglichst scherungsarmes Ausziehen des Aufbaumaterials zu einer Schicht erfolgen.

Das erfindungsgemäße Verfahren zum generativen Herstellen eines dreidimensionalen Objekts durch schichtweises selektives Verfestigen eines Aufbaumaterials, vorzugsweise eines Pulvers, enthält die Schritte Aufbringen einer Schicht des Aufbaumaterials innerhalb eines Baufelds mittels eines in einer ersten Richtung und ihrer Gegenrichtung über das Baufeld fahrenden Beschichters, selektives Verfestigen der aufgebrachten Schicht an Stellen, die einem Querschnitt des herzustellenden Objekts entsprechen, mittels einer Verfestigungsvorrichtung und Wiederholen der Schritte des Aufbringens und des selektiven Verfestigens, bis das Objekt fertiggestellt ist. Zum Aufbringen der Schicht wird ein erfindungsgemäßes Beschichtungsverfahren verwendet. Mit einem solchen Herstellungsverfahren können beispielsweise die Vorteile des erfindungsgemäßen Beschichtungsverfahrens beim Herstellen eines dreidimensionalen Objekts genutzt werden.

Weitere Merkmale und Zweckmäßigkeiten der Erfindung ergeben sich aus der Beschreibung von Ausführungsbeispielen anhand der beigefügten Zeichnungen, die nicht zwingend als maßstäblich zu betrachten sind.
- Fig. 1: ist eine schematische, teilweise im Schnitt dargestellte Ansicht einer Vorrichtung zum generativen Herstellen eines dreidimensionalen Objekts gemäß einer Ausführungsform der vorliegenden Erfindung.
- Fig. 2: ist eine schematische Schnittansicht eines Ausschnitts der in Fig. 1 gezeigten Vorrichtung beim Aufbringen einer Pulverschicht in einer ersten Beschichtungsrichtung.
- Fig. 3: ist eine schematische Schnittansicht eines Ausschnitts der in Fig. 1 gezeigten Vorrichtung beim Aufbringen einer Pulverschicht in einer zweiten Beschichtungsrichtung.
- Fig. 4a: bis 4d sind schematische Teilschnittansichten verschiedener Verdichtungsklingen.

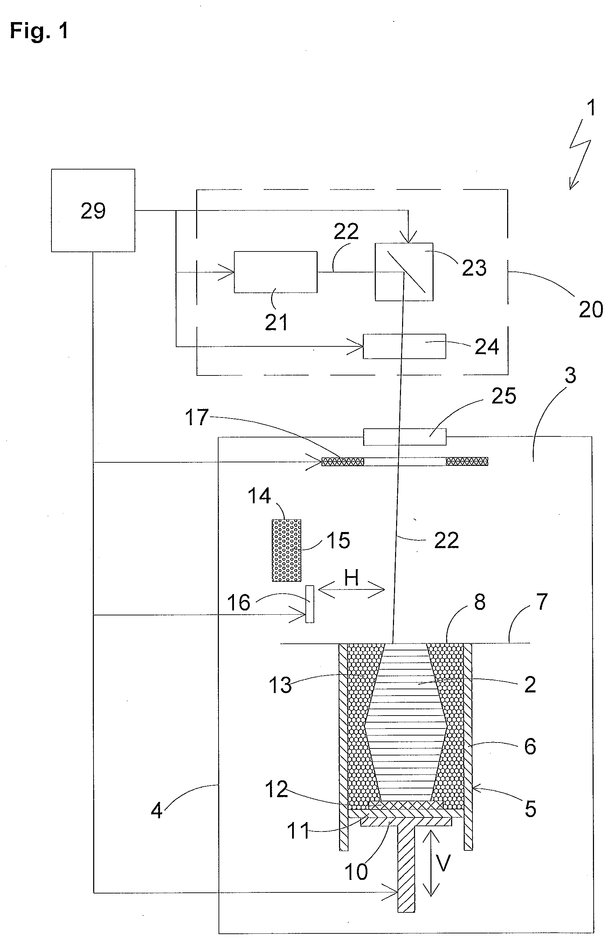

Im Folgenden wird mit Bezug auf Fig. 1 eine Ausführungsform der vorliegenden Erfindung beschrieben. Die in Fig. 1 dargestellte Vorrichtung ist eine Lasersinter- oder Laserschmelzvorrichtung 1. Zum Aufbauen eines Objekts 2 enthält sie eine Prozesskammer 3 mit einer Kammerwandung 4.

In der Prozesskammer 3 ist ein nach oben offener Behälter 5 mit einer Behälterwandung 6 angeordnet. Durch die obere Öffnung des Behälters 5 ist eine Arbeitsebene 7 definiert, wobei der innerhalb der Öffnung liegende Bereich der Arbeitsebene 7, der zum Aufbau des Objekts 2 verwendet werden kann, als Baufeld 8 bezeichnet wird.

In dem Behälter 5 ist ein in einer vertikalen Richtung V bewegbarer Träger 10 angeordnet, an dem eine Grundplatte 11 angebracht ist, die den Behälter 5 nach unten abschließt und damit dessen Boden bildet. Die Grundplatte 11 kann eine getrennt von dem Träger 10 gebildete Platte sein, die an dem Träger 10 befestigt ist, oder sie kann integral mit dem Träger 10 gebildet sein. Je nach verwendetem Pulver und Prozess kann auf der Grundplatte 11 noch eine Bauplattform 12 als Bauunterlage angebracht sein, auf der das Objekt 2 aufgebaut wird. Das Objekt 2 kann aber auch auf der Grundplatte 11 selber aufgebaut werden, die dann als Bauunterlage dient. In Fig. 1 ist das in dem Behälter 5 auf der Bauplattform 12 zu bildende Objekt 2 unterhalb der Arbeitsebene 7 in einem Zwischenzustand dargestellt mit mehreren verfestigten Schichten, umgeben von unverfestigt gebliebenem Aufbaumaterial 13.

Die Lasersintervorrichtung 1 enthält weiter einen Vorratsbehälter 14 für ein durch elektromagnetische Strahlung verfestigbares pulverförmiges Aufbaumaterial 15 und einen in einer horizontalen Richtung H bewegbaren Beschichter 16 zum Aufbringen des Aufbaumaterials 15 innerhalb des Baufelds 8. Optional ist in der Prozesskammer 3 eine Strahlungsheizung 17 angeordnet, die zum Beheizen des aufgebrachten Aufbaumaterials 15 dient. Als Strahlungsheizung 17 kann beispielsweise ein Infrarotstrahler vorgesehen sein.

Die Lasersintervorrichtung 1 enthält ferner eine Belichtungsvorrichtung 20 mit einem Laser 21, der einen Laserstrahl 22 erzeugt, der über eine Umlenkvorrichtung 23 umgelenkt und durch eine Fokussiervorrichtung 24 über ein Einkoppelfenster 25, das an der Oberseite der Prozesskammer 3 in der Kammerwandung 4 angebracht ist, auf die Arbeitsebene 7 fokussiert wird.

Weiter enthält die Lasersintervorrichtung 1 eine Steuereinheit 29, über die die einzelnen Bestandteile der Vorrichtung 1 in koordinierter Weise zum Durchführen des Bauprozesses gesteuert werden. Alternativ kann die Steuereinheit auch teilweise oder ganz außerhalb der Vorrichtung angebracht sein. Die Steuereinheit kann eine CPU enthalten, deren Betrieb durch ein Computerprogramm (Software) gesteuert wird. Das Computerprogramm kann getrennt von der Vorrichtung auf einem Speichermedium gespeichert sein, von dem aus es in die Vorrichtung, insbesondere in die Steuereinheit geladen werden kann.

Im Betrieb wird zum Aufbringen einer Pulverschicht zunächst der Träger 10 um eine Höhe abgesenkt, die der gewünschten Schichtdicke entspricht. Der Beschichter 16 fährt zunächst zu dem Vorratsbehälter 14 und nimmt aus ihm eine zum Aufbringen einer Schicht ausreichende Menge des Aufbaumaterials 15 auf. Dann fährt er über das Baufeld 8 und bringt dort eine dünne Schicht des pulverförmigen Aufbaumaterials 15 auf die Bauunterlage oder eine bereits vorher vorhandene Pulverschicht auf. Das Aufbringen erfolgt zumindest über den gesamten Querschnitt des herzustellenden Objekts 2, vorzugsweise über das gesamte Baufeld 8, also den durch die Behälterwandung 6 begrenzten Bereich. Optional wird das pulverförmige Aufbaumaterial 15 mittels einer Strahlungsheizung 17 auf eine Arbeitstemperatur aufgeheizt. Anschließend wird der Querschnitt des herzustellenden Objekts 2 von dem Laserstrahl 22 abgetastet, sodass das pulverförmige Aufbaumaterial 15 an den Stellen verfestigt wird, die dem Querschnitt des herzustellenden Objekts 2 entsprechen. Dabei werden die Pulverkörner an diesen Stellen durch die durch die Strahlung eingebrachte Energie teilweise oder vollständig aufgeschmolzen, sodass sie nach einer Abkühlung miteinander verbunden als Festkörper vorliegen. Diese Schritte werden solange wiederholt, bis das Objekt 2 fertiggestellt ist und der Prozesskammer 3 entnommen werden kann.

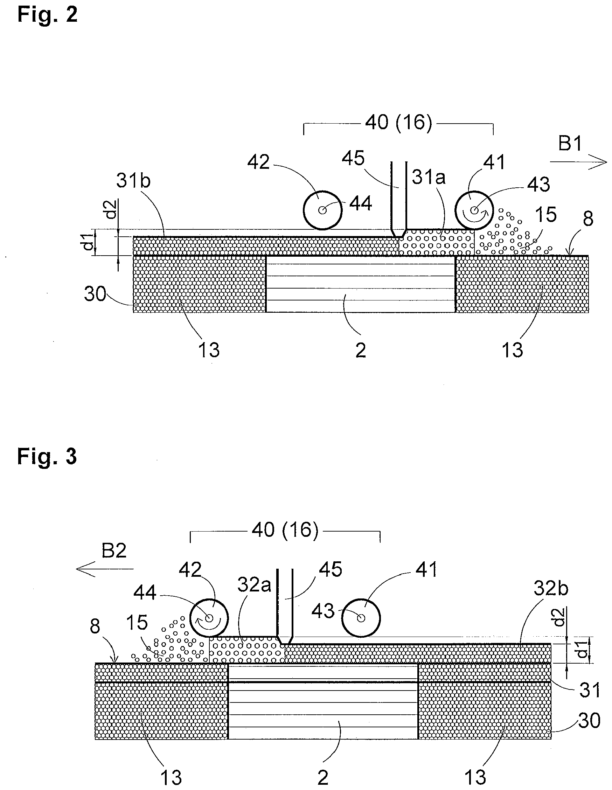

Der Vorgang der Beschichtung ist in Fig. 2 näher dargestellt. In einem durch vorangegangene Prozessschritte aufgebauten Pulverbett 30 ist der verfestigte Teil des herzustellenden Objekts 2 von unverfestigt gebliebenem Pulver 13 umgeben. Auf dieses Pulverbett 30 wird dann mittels einer Bewegung des Beschichters in einer ersten Beschichtungsrichtung B1 eine weitere Pulverschicht des Aufbaumaterials 15 aufgetragen.

Wie in Fig. 2 gezeigt enthält der Beschichter eine Beschichtungseinheit 40, die fest an dem Beschichter angebracht oder als auswechselbares Modul gebildet sein kann. Die Beschichtungseinheit 40 enthält zwei in der ersten Beschichtungsrichtung voneinander beabstandete Beschichtungswalzen 41, 42, die sich quer, vorzugsweise senkrecht zu der ersten Beschichtungsrichtung B1 parallel zum Baufeld erstrecken (in der Figur senkrecht zur Zeichnungsebene) und jeweils über in ihrer Längsrichtung verlaufende Drehachsen 43, 44 drehbar gelagert sind. Beide Beschichtungswalzen 41, 42 können vorzugsweise unabhängig voneinander zur Drehung angetrieben werden. Wie bei der Beschreibung des Beschichtungsvorgangs deutlich werden wird, ist es vorteilhaft, wenn die Beschichtungswalzen 41, 42 in einem zueinander entgegengesetzten Drehsinn angetrieben werden können. In der vorliegenden Ausführungsform haben die beiden Beschichtungswalzen 41, 42 denselben Durchmesser, sie können aber auch unterschiedliche Durchmesser aufweisen. Vorzugsweise sind die Beschichtungswalzen 41, 42 so in der Beschichtungseinheit 40 angeordnet, dass ihre der Arbeitsebene zugewandten Unterseiten im Wesentlichen im gleichen Abstand zu dem Baufeld 8 haben.

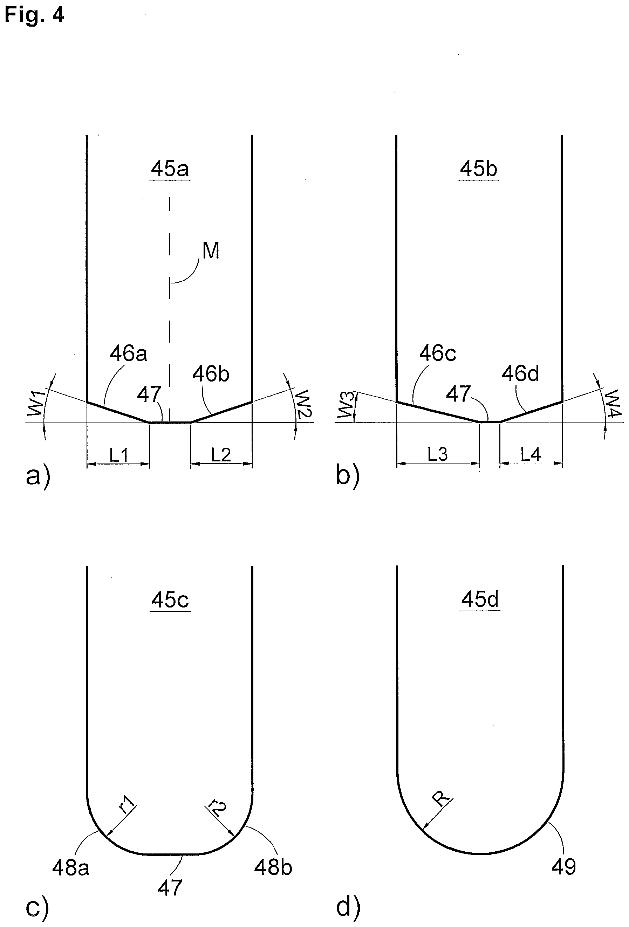

Zwischen den Beschichtungswalzen 41, 42 ist eine Verdichterklinge 45 als Verdichtungs- bzw. Glättungselement angeordnet. Die Verdichterklinge 45 erstreckt sich ebenfalls quer, vorzugsweise senkrecht zu der ersten Beschichtungsrichtung B1 (in der Figur senkrecht zur Zeichnungsebene) und senkrecht zum Baufeld. Vorzugsweise ist die Verdichterklinge 45 mittig zwischen den Beschichtungswalzen 41, 42 angeordnet. Ebenfalls vorzugsweise ist die Verdichterklinge 45 austauschbar in der Beschichtungseinheit 40 angeordnet, so dass sie zu Reinigungs- und/oder Wartungsarbeiten leicht aus der Beschichtungseinheit 40 entnommen und/oder bei Beschädigung leicht ersetzt werden kann. Außerdem kann so die unten mit Bezug auf Fig. 4 beschriebene Geometrie der Verdichterklinge leicht an die Anforderungen des jeweiligen Baujobs angepasst werden.

Die beiden Beschichtungswalzen 41, 42 und/oder die Verdichterklinge 45 sind vorzugsweise höhenverstellbar (also in einer vertikalen Richtung senkrecht zum Baufeld 8 verstellbar) in der Beschichtungseinheit 40 angeordnet. Die beiden Beschichtungswalzen 41, 42 können unabhängig voneinander höhenverstellbar ausgebildet sein, sie können aber auch in ihrer Höhenverstellung gekoppelt in der Beschichtungseinheit 40 angeordnet sein. Die Höhenverstellung kann manuell oder automatisch erfolgen, beispielsweise elektrisch und/oder pneumatisch, vorzugsweise computergesteuert.

Beim Verfahren der Beschichtungseinheit 40 in der ersten Beschichtungsrichtung B1 wird die vorne liegende Beschichtungswalze 41 so angetrieben, dass sie sich mit Bezug auf die erste Beschichtungsrichtung B1 gegenläufig dreht (gegen den Uhrzeigersinn in Fig. 2). Das bedeutet, dass ihre Drehrichtung entgegengesetzt der Drehrichtung einer Walze ist, die in der ersten Beschichtungsrichtung B1 auf einer Unterlage abrollen würde.

Die vorne liegende Beschichtungswalze 41 schiebt pulverförmiges Aufbaumaterial 15, dass aus einem (nicht gezeigten) Pulvervorrat am Rande des Baufelds stammt oder das von einer (nicht gezeigten) Pulverauftragseinrichtung vor der Beschichtungswalze 41 auf das Baufeld aufgetragen wird, über das Baufeld 8 und zieht sie dadurch zu einer gleichmäßigen dünnen Pulverschicht 31a mit einer ersten Dicke d1 aus, ohne sie all zu sehr zu verdichten. Die gegenläufige Drehung der Beschichtungswalze 41 führt dabei zu einem besonders scherungsarmen und damit gleichmäßigen Schichtauftrag ohne innere Spannungen. Die erste Dicke d1 ist durch den Abstand der Unterseite (der dem Baufeld 8 am nächsten liegenden Seite) der vorne liegenden Beschichtungswalze 41 von dem Pulverbett 30 bestimmt, so dass die erste Dicke d1 näherungsweise diesem Abstand der Beschichtungswalze 41 von dem Pulverbett entspricht.

Die Unterseite der Verdichterklinge 45 hat einen geringeren Abstand von dem Pulverbett 30 als die Unterseite der vorne liegende Beschichtungswalze 41. Dadurch wird beim Verfahren der Verdichterklinge 45 in der ersten Beschichtungsrichtung B1 über die von der vorne liegende Beschichtungswalze 41 aufgebrachte Pulverschicht 31a eine Kraftkomponente auf das Pulver nach unten ausgeübt, wodurch die Pulverkörner zusammengedrückt und die Pulverschicht verdichtet wird. Dadurch entsteht eine verdichtete Pulverschicht 31b mit einer zweiten Dicke d2, die kleiner als die erste Dicke d1 ist. Die zweite Dicke d2 ist durch den Abstand der Unterseite der Verdichterklinge 45 von dem Pulverbett 30 bestimmt, so dass die zweite Dicke d2 näherungsweise diesem Abstand der Unterseite der Verdichterklinge 45 von dem Pulverbett 30 entspricht.

Die hinten liegende Beschichtungswalze 42 ist bei diesem Vorgang nicht beteiligt und braucht daher nicht unbedingt angetrieben zu werden.

Nach dem Aufbringen und Verdichten der Pulverschicht werden die dem Querschnitt des herzustellenden Objekts in dieser Schicht entsprechenden Stellen mit dem Laserstahl belichtet, wodurch die Pulverschicht selektiv verfestigt wird. Anschließend wird der Träger wieder um eine vorbestimmte Höhe abgesenkt.

Wie in Fig. 3 gezeigt verfährt die Beschichtungseinheit 40 anschließend in einer zweiten Beschichtungsrichtung B2 über das Baufeld 8, die der ersten Beschichtungsrichtung B1 entgegengesetzt ist. Dabei bedeutet entgegengesetzt nicht unbedingt einen Winkel von 180° in einer Draufsicht auf die Arbeitsebene, sondern nur, dass die zweite Beschichtungsrichtung B2 eine Komponente hat, die in die Gegenrichtung der ersten Beschichtungsrichtung B1 zeigt. Vorzugsweise liegt der Winkel zwischen der ersten und der zweiten Beschichtungsrichtung zwischen 150° und 210°, in weiter bevorzugter Weise beträgt er 180°.

Bei der Fahrt in die zweite Beschichtungsrichtung B2 sind die Rollen der Beschichtungswalzen vertauscht: Die nunmehr vorlaufende Beschichtungswalze 42 wird im Uhrzeigersinn angetrieben, was aufgrund der Umkehr der Beschichtungsrichtung jetzt ebenfalls einer gegenläufigen Drehung entspricht, die nunmehr nachlaufende Beschichtungswalze 41 stillstehen kann. Die Oberseite des Pulverbetts ist nunmehr die Oberfläche der zuvor aufgebrachten und selektiv verfestigten Pulverschicht 31.

Analog zu dem oben mit Bezug auf Fig. 2 beschriebenen Ablauf wird pulverförmiges Aufbaumaterial 15 von der nunmehr vorlaufenden Beschichtungswalze 42 zu einer gleichmäßigen dünnen Pulverschicht 32a mit einer ersten Dicke d1 ausgezogen. Diese Pulverschicht 32a wird dann von der Verdichterklinge 45 verdichtet, wobei die verdichtete Pulverschicht 32b einer zweiten Dicke d2 hat, die kleiner als die erste Dicke d1 ist. Die Dicken d1 und d2 können dieselben Dicken wie die in Fig. 2 gezeigten sein oder von ihnen verschieden sein.

Anschließend wird die verdichtete Pulverschicht 32b durch den Laserstrahl 22 selektiv verfestigt, und die in Fig. 2 und 3 gezeigten Abläufe werden wiederholt, bis das Objekt 2 fertiggestellt ist.

Somit stellt die vorliegende Erfindung eine Beschichtungseinheit bereit, bei der Aufbringen und Verdichten einer Pulverschicht voneinander getrennt bewirkt werden, das aber dennoch in einander entgegengesetzten Beschichtungsrichtungen verwendet werden kann.

Fig. 4 zeigt schematische Teilschnittansichten verschiedener Verdichtungsklingen. Sie unterscheiden sich dabei in dem Aufbau ihrer im Betrieb dem Baufeld zugewandten Unterseite.

Fig. 4a zeigt eine Verdichterklinge 45a, die an ihrer Unterseite eine erste und eine zweite Verdichtungsfläche 46a, 46b aufweist. Zwischen den Verdichtungsflächen 46a, 46b liegt eine im Betrieb parallel zu dem Baufeld ausgerichtete Horizontalfläche 47. Die beiden Verdichtungsflächen 46a, 46b steigen von der Horizontalfläche 47 aus zur Außenkante der Verdichterklinge 45a hin um einen vorbestimmten Steigungswinkel W1, W2 an.

Je nach Bewegungsrichtung der Verdichterklinge 45a dient die eine oder die andere der Verdichtungsflächen 46a, 46b zum Verdichten der von einer Beschichtungswalze 41, 42, ausgezogenen Pulverschicht. Durch Variation des Winkels W1, W2 und einer Länge L1 bzw. L2 der Verdichtungsflächen 46a, 46b sowie einer Bewegungsgeschwindigkeit der Verdichterklinge 45a kann die Verdichtungswirkung in weiten Grenzen beeinflusst werden.

Die Verdichterklinge 45a ist spiegelsymmetrisch zu ihrer Mittelebene M, d.h. W1=W2 und L1=L2. Dabei können sich die Verdichtungsflächen 46a, 46b auch bis zur Mitte der Klinge erstrecken, so dass gar keine Horizontalfläche 47 mehr verbleibt.

Fig. 4b zeigt eine Verdichterklinge 45b, die an ihrer Unterseite ebenfalls zwei Verdichtungsflächen 46c, 46d aufweist, die jedoch nicht symmetrisch sind. Während die Verdichterklinge 45a gleiche Verdichtungswirkungen in beiden Beschichtungsrichtungen erzielt, kann es vorteilhaft sein, in beide Richtungen verschiedene Verdichtungswirkungen bzw. -kräfte bzw. -richtungen zu erzielen. Das kann beispielsweise bei der Doppelbeschichtung der Fall sein, bei der zunächst zwei Pulverschichten aufgetragen werden, ohne sie zwischendurch notwendigerweise zu verfestigen, und dann die aus den zwei Teilschichten gebildete Gesamtschicht selektiv verfestigt wird.

Dazu unterscheiden sich bei der Verdichterklinge 45b die Verdichtungsflächen 46c, 46d in ihren Winkeln W3, W4 und/oder in ihren Längen L3, L4 voneinander, d.h. W3≠W4 und/oder L3≠L4. Auch hierbei können die Längen L3, L4 so groß sein, dass keine Horizontalfläche 47 mehr verbleibt.

Fig. 4c zeigt eine Verdichterklinge 45c, die an ihrer Unterseite keine Abschrägungen, sondern Abrundungen 48a, 48b aufweist. Die Abrundungsradien r1, r2 können gleich oder voneinander verschieden sein. Sie können auch so groß sein, dass keine Horizontalfläche 47 mehr verbleibt. Auch mittels dieser Abrundungen 48a, 48b kann eine Verdichtung der ausgezogenen Pulverschicht erzielt werden, deren Wirkrichtung durch die Abrundungsradien r1, r2 und die Bewegungsgeschwindigkeit der Verdichterklinge 45c beeinflusst werden kann.

Fig. 4d zeigt eine Verdichterklinge 45d, die an ihrer Unterseite eine Abrundung 49 in Form eines Zylindersegments mit einem Krümmungsradius R aufweist. Auch mittels dieser Abrundung 49 kann eine Verdichtung der ausgezogenen Pulverschicht erzielt werden, deren Wirkrichtung durch den Krümmungsradius R und die Bewegungsgeschwindigkeit der Verdichterklinge 45d beeinflusst werden kann.

Auch Kombinationen der oben beschriebenen Klingengeometrien sind möglich, beispielsweise Verdichtungsflächen gemäß Fig. 4a oder 4b in Verbindung mit Abrundungen gemäß Fig. 4c.

Während in dem obigen Ausführungsbeispiel eine Verdichterklinge zum Verdichten der von der jeweils vorderen Beschichtungswalze ausgezogenen Pulverschicht dient, kann an ihrer Stelle auch jedes andere zum Verdichten der ausgezogenen Pulverschicht geeignete Verdichtungselement angeordnet sein. Alternativ kann auch ein zum weiteren Glätten der Pulverschicht oder lediglich zu einer weiteren Verringerung der Schichtdicke dienendes Glättungselement anstelle der Verdichterklinge angeordnet sein.

Während in dem obigen Ausführungsbeispiel jede Schicht nach dem Aufbringen selektiv verfestigt wird, können auch zwei oder mehr Schichten aufgebracht werden, ohne dass zwischendurch verfestigt wird, und diese Schichten dann gemeinsam verfestigt werden.

Während in dem obigen Ausführungsbeispiel die Beschichtung abwechselnd in der ersten und zweiten Beschichtungsrichtung erfolgt, kann sie auch immer in derselben Beschichtungsrichtung erfolgen, z.B. immer in der ersten Beschichtungsrichtung.

Auch wenn die vorliegende Erfindung anhand einer Lasersinter- bzw. Laserschmelzvorrichtung beschrieben wurde, ist sie nicht auf das Lasersintern oder Laserschmelzen eingeschränkt. Sie kann auf beliebige Verfahren zum generativen Herstellen eines dreidimensionalen Objektes durch schichtweises Aufbringen und selektives Verfestigen eines Aufbaumaterials angewendet werden.

Der Belichter kann beispielsweise einen oder mehrere Gas- oder Festkörperlaser oder jede andere Art von Laser wie z.B. Laserdioden, insbesondere VCSEL (Vertical Cavity Surface Emitting Laser) oder VECSEL (Vertical External Cavity Surface Emitting Laser), oder eine Zeile dieser Laser umfassen. Allgemein kann als Belichter jede Einrichtung verwendet werden, mit der Energie als Wellen- oder Teilchenstrahlung selektiv auf eine Schicht des Aufbaumaterials aufgebracht werden kann. Anstelle eines Lasers können beispielsweise eine andere Lichtquelle, ein Elektronenstrahl oder jede andere Energie- bzw. Strahlenquelle verwendet werden, die geeignet ist, das Aufbaumaterial zu verfestigen. Statt des Ablenkens eines Strahls kann auch das Belichten mit einem verfahrbaren Zeilenbelichter angewendet werden. Auch auf das selektive Maskensintern, bei dem eine ausgedehnte Lichtquelle und eine Maske verwendet werden, oder auf das High-Speed-Sintern (HSS), bei dem auf dem Aufbaumaterial selektiv ein Material aufgebracht wird, das die Strahlungsabsorption an den entsprechenden Stellen erhöht (Absorptionssintern) oder verringert (Inhibitionssintern), und dann unselektiv großflächig oder mit einem verfahrbaren Zeilenbelichter belichtet wird, kann die Erfindung angewendet werden.

Anstelle des Einbringens von Energie kann das selektive Verfestigen des aufgetragenen Aufbaumaterials auch durch 3D-Drucken erfolgen, beispielsweise durch Aufbringen eines Klebers. Allgemein bezieht sich die Erfindung auf das generative Herstellen eines Objekts mittels schichtweisen Auftragens und selektiven Verfestigens eines Aufbaumaterials unabhängig von der Art und Weise, in der das Aufbaumaterial verfestigt wird.

Als Aufbaumaterial können verschiedene Materialien verwendet werden, vorzugsweise Pulver, insbesondere Metallpulver, Kunststoffpulver, Keramikpulver, Sand, gefüllte oder gemischte Pulver.

## Patentansprüche

1. Beschichtungseinheit (40) zum Aus- und/oder Nachrüsten einer Vorrichtung (1) zum generativen Herstellen eines dreidimensionalen Objekts (2) durch selektives schichtweises Verfestigen eines Aufbaumaterials (15), vorzugsweise eines Pulvers, wobei die Vorrichtung (1) einen über ein Baufeld (8) bewegbaren Beschichter (16) zum Aufbringen einer Schicht (31b, 32b) des Aufbaumaterials innerhalb des Baufelds (8) und eine Verfestigungsvorrichtung (20) zum selektiven Verfestigen der aufgebrachten Schicht (31b, 32b) an Stellen, die einem Querschnitt des herzustellenden Objekts (2) entsprechen, enthält und dazu ausgebildet und/oder gesteuert ist, die Schritte des Aufbringens und des selektiven Verfestigens zu wiederholen, bis das Objekt (2) fertiggestellt ist,
wobei die Beschichtungseinheit (40) enthält:
zumindest zwei in einer ersten Richtung (B1) voneinander beabstandete und sich in eine zweite Richtung quer, vorzugsweise senkrecht zu der ersten Richtung erstreckende Beschichtungswalzen (41, 42) und
ein in der ersten Richtung zwischen den beiden Beschichtungswalzen (41, 42) angeordnetes und sich in der zweiten Richtung erstreckendes Verdichtungs- und/oder Glättungselement (45),
wobei eine dem Baufeld (8) zugewandte Unterseite des Verdichtungs- und/oder Glättungselements (45) näher an dem Baufeld (8) angeordnet ist als dem Baufeld (8) zugewandte Unterseiten der beiden Beschichtungswalzen (41, 42),
wobei die Beschichtungseinheit (45) dazu eingerichtet ist:
je nach Bewegung der Beschichtungseinheit in die erste Richtung (B1) oder in ihre Gegenrichtung (B2) Aufbaumaterial mit der in der jeweiligen Bewegungsrichtung (B1, B2) vorlaufenden Beschichtungswalze (41, 42) zu einer gleichmäßigen Schicht (31a, 32a) auszuziehen und
die von der vorlaufenden Beschichtungswalze (41, 42) ausgezogene Schicht (31a, 32a) mit dem Verdichtungs- und/oder Glättungselement (45) zu verdichten und/oder zu glätten.

2. Beschichtungseinheit (40) gemäß Anspruch 1, bei der
das Verdichtungs- und/oder Glättungselement (45) in der ersten Richtung (B1) im Wesentlichen mittig zwischen den beiden Beschichtungswalzen (41, 42) angeordnet ist und/oder
in der ersten Richtung (B1) im Wesentlichen unsymmetrisch oder im Wesentlichen spiegelsymmetrisch gebildet ist.

3. Beschichtungseinheit (40) gemäß Anspruch 1 oder 2, bei der das Verdichtungs- und/oder Glättungselement (45) eine sich in der zweiten und eine senkrecht zu der ersten und der zweiten Richtung verlaufende dritte Richtung erstreckende Klinge ist, die an ihrer in der dritten Richtung gelegenen in Richtung des Baufelds weisenden Unterseite zumindest eine geneigte Verdichtungs- und/oder Glättungsfläche (46a-d) und/oder eine Abrundung (48a-b), vorzugsweise in Form eines Zylindersegments (49) und/oder dachförmigen Elements, zum Verdichten und/oder Glätten der Schicht (31a, 32a) aufweist.

4. Beschichtungseinheit (40) gemäß einem der Ansprüche 1 bis 3, bei der das Verdichtungs- und/oder Glättungselement (45) austauschbar in der Beschichtungseinheit (40) angeordnet ist.

5. Beschichtungseinheit (40) gemäß einem der Ansprüche 1 bis 4, bei der das Verdichtungs- und/oder Glättungselement (45) in der dritten Richtung manuell und/oder automatisch verstellbar in der Beschichtungseinheit (40) angeordnet ist.

6. Beschichtungseinheit (40) gemäß einem der Ansprüche 1 bis 5, bei der
die beiden Beschichtungswalzen (41, 42) denselben Durchmesser aufweisen und/oder
die beiden Beschichtungswalzen (41, 42) in einem zueinander entgegengesetzten Drehsinn antreibbar in der Beschichtungseinheit (40) angeordnet sind.

7. Beschichter (16) zum Aus- und/oder Nachrüsten einer Vorrichtung (1) zum Herstellen eines dreidimensionalen Objekts (2) durch selektives schichtweises Verfestigen von Aufbaumaterial (15), vorzugsweise eines Pulvers, wobei die Vorrichtung (1) daran angepasst ist, den Beschichter (16) so aufzunehmen, dass er über ein Baufeld (8) bewegbar ist zum Aufbringen einer Schicht (31b, 32b) des Aufbaumaterials (15) innerhalb des Baufelds (8), eine Verfestigungsvorrichtung (20) zum selektiven Verfestigen der aufgebrachten Schicht (31b, 32b) an Stellen, die einem Querschnitt des herzustellenden Objekts (2) entsprechen, enthält und dazu ausgebildet und/oder gesteuert ist, die Schritte des Aufbringens und des selektiven Verfestigens zu wiederholen, bis das Objekt (2) fertiggestellt ist,
wobei der Beschichter (16) eine Beschichtungseinheit (40) gemäß einem der Ansprüche 1 bis 6 enthält.

8. Beschichter (16) gemäß Anspruch 7, bei dem die Beschichtungseinheit (40) ein auswechselbares Beschichtungsmodul ist.

9. Vorrichtung (1) zum generativen Herstellen eines dreidimensionalen Objekts (2) durch schichtweises selektives Verfestigen eines Aufbaumaterials (15), vorzugsweise eines Pulvers, umfassend:
einen über ein Baufeld (8) bewegbaren Beschichter (16) zum Aufbringen einer Schicht (31b, 32b) des Aufbaumaterials (15) innerhalb des Baufelds (8) und
eine Verfestigungsvorrichtung (20) zum selektiven Verfestigen der aufgebrachten Schicht (31b, 32b) an Stellen, die einem Querschnitt des herzustellenden Objekts (2) entsprechen,
wobei die Vorrichtung (1) ausgebildet und/oder gesteuert ist, die Schritte des Aufbringens und des selektiven Verfestigens zu wiederholen, bis das Objekt (2) fertiggestellt ist, und
wobei der Beschichter (16) gemäß einem der Ansprüche 7 bis 8 ausgebildet ist.

10. Vorrichtung gemäß Anspruch 9, die ferner eine Einrichtung zum Auftragen von Aufbaumaterial (15) in der jeweiligen Bewegungsrichtung (B1, B2) vor der vorlaufenden Walze (41, 42) enthält.

11. Vorrichtung gemäß Anspruch 9 oder 10, bei der die Beschichtungseinheit (40) so in der Vorrichtung angeordnet ist, dass die erste Richtung die Bewegungsrichtung (B1) des Beschichters über das Baufeld (8) ist und die dritte Richtung die Vertikale senkrecht zum Baufeld (8) ist.

12. Beschichtungsverfahren in einer Vorrichtung (1) zum generativen Herstellen eines dreidimensionalen Objekts (2) durch selektives schichtweises Verfestigen eines Aufbaumaterials (15), vorzugsweise eines Pulvers, wobei die Vorrichtung einen über ein Baufeld (8) bewegbaren Beschichter (16) zum Aufbringen einer Schicht (31b, 32b) des Aufbaumaterials (15) innerhalb des Baufelds (8) und eine Verfestigungsvorrichtung (20) zum selektiven Verfestigen der aufgebrachten Schicht (31b, 32b) an Stellen, die einem Querschnitt des herzustellenden Objekts (2) entsprechen, enthält und dazu ausgebildet und/oder gesteuert ist, die Schritte des Aufbringens und des selektiven Verfestigens zu wiederholen, bis das Objekt (2) fertiggestellt ist,
wobei das Beschichtungsverfahren mittels einer Beschichtungseinheit (40) erfolgt, die enthält:
zumindest zwei in einer ersten Richtung (B1) voneinander beabstandete und sich in eine zweite Richtung quer, vorzugsweise senkrecht zu der ersten Richtung erstreckende Beschichtungswalzen (41, 42) und
ein in der ersten Richtung zwischen den beiden Beschichtungswalzen (41, 42) angeordnetes und sich in der zweiten Richtung erstreckendes Verdichtungs- und/oder Glättungselement (45), und
wobei die Beschichtungseinheit (40) je nach ihrer Bewegung in die erste Richtung (B1) oder in ihre Gegenrichtung (B2) Aufbaumaterial (15) mit der in der jeweiligen Bewegungsrichtung vorlaufenden Beschichtungswalze (41, 42) zu einer gleichmäßigen Schicht (31a, 32a) auszieht und
die von der vorlaufenden Beschichtungswalze (41, 42) ausgezogene Schicht (31a, 32a) mit dem Verdichtungs- und/oder Glättungselement (45) verdichtet und/oder glättet.

13. Verfahren gemäß Anspruch 12, bei dem
eine dem Baufeld (48) zugewandte Unterseite des Verdichtungs- und/oder Glättungselements (45) näher an dem Baufeld (8) angeordnet wird als dem Baufeld (8) zugewandte Unterseiten der beiden Beschichtungswalzen (41, 42) und/oder
dem Baufeld (8) zugewandte Unterseiten der beiden Beschichtungswalzen (41, 42) im Wesentlichen im gleichen Abstand zu dem Baufeld (41) angeordnet werden.

14. Verfahren gemäß Anspruch 12 oder 13, bei dem der Drehsinn jeder Beschichtungswalze (41, 42) so gewählt wird, dass jede Beschichtungswalze (41, 42), wenn sie die in der jeweiligen Bewegungsrichtung (B1, B2) vorlaufenden Beschichtungswalze ist, gegenläufig zu der jeweiligen Bewegungsrichtung (B1, B2) gedreht wird.

15. Verfahren zum generativen Herstellen eines dreidimensionalen Objekts (2) durch schichtweises selektives Verfestigen eines Aufbaumaterials (15), vorzugsweise eines Pulvers, mit den Schritten:
Aufbringen einer Schicht (31b, 32b) des Aufbaumaterials innerhalb eines Baufelds (8) mittels eines in einer ersten Richtung (B1) und ihrer Gegenrichtung (B2) über das Baufeld (8) fahrenden Beschichters (16),
selektives Verfestigen der aufgebrachten Schicht (31b, 32b) an Stellen, die einem Querschnitt des herzustellenden Objekts (2) entsprechen, mittels einer Verfestigungsvorrichtung (20) und
Wiederholen der Schritte des Aufbringens und des selektiven Verfestigens, bis das Objekt (2) fertiggestellt ist,
wobei zum Aufbringen der Schicht (31b, 32b) ein Beschichtungsverfahren gemäß einem der Ansprüche 12 bis 14 verwendet wird.

## Claims

1. Recoating unit (40) for equipping or retrofitting a device (1) for additive manufacturing of a three-dimensional object (2) by selectively solidifying a building material (15), preferably a powder, layer by layer, wherein the device (1) comprises a recoater (16) movable across a build area (8) for applying a layer (31b, 32b) of the building material (15) within the build area (8) and a solidification device (20) for selectively solidifying the applied layer (31b, 32b) at positions corresponding to a cross-section of the object (2) to be manufactured, and is formed and/or controlled to repeat the steps of applying and selectively solidifying until the object (2) is completed,
wherein the recoating unit (40) comprises:
at least two recoating rollers (41, 42) spaced apart from each other in a first direction (B1) and extending into a second direction transversely, preferably perpendicularly, to the first direction, and
a compacting and/or smoothing element (45) arranged between the two recoating rollers (41, 42) in the first direction (B1) and extending into the second direction,
wherein a lower side of the compacting and/or smoothing element (45) facing the build area (8) is arranged closer to the build area (8) than the lower sides of the two recoating rollers (41, 42) facing the build area (8),
wherein the recoating unit (40) is adapted to:
draw-out building material to a regular layer (31a, 32a), depending on the movement of the recoating unit into the first direction (B1) or into its reverse direction (B2), using the recoating roller (41, 42) arranged ahead in the respective moving direction (B1, B2), and
compact or smoothen the layer (31a, 32a) drawn-out by the recoating roller (41, 42) arranged ahead using the compacting and/or smoothing element (45).

2. Recoating unit (40) according to claim 1, wherein
the compacting and/or smoothing element (45) is arranged essentially centered in the first direction (B1) between the two recoating rollers (41, 42) and/or
is formed essentially in an unsymmetrical way or in a mirror-symmetrical way in the first direction (B1).

3. Recoating unit (40) according to claim 1 or 2, wherein the compacting and/or smoothing element (45) is a blade extending into the second direction and into a third direction perpendicular to the first and second directions which has, at its lower side positioned in the third direction and facing into the direction of the build area, at least one sloped compacting and/or smoothing plane (46a-d) and/or a rounding (48a-b), preferably in form of a cylindrical segment (49) and/or a roofshaped element, for compacting and/or smoothing the layer (31a, 32a) .

4. Recoating unit (40) according to one of claims 1 to 3, wherein the compacting and/or smoothing element (45) is arranged in an exchangeable way in the recoating unit (40).

5. Recoating unit (40) according to one of claims 1 to 4, wherein the compacting and/or smoothing element (45) is arranged in the third direction in a manually or automatically adjustable way in the recoating unit (40).

6. Recoating unit (40) according to one of claims 1 to 5, wherein
the two recoating rollers (41, 42) have the same diameter and/or
the two recoating rollers (41, 42) are arranged drivable in rotational directions opposite to each other in the recoating unit (40).

7. Recoater (16) for equipping or retrofitting a device (1) for additive manufacturing of a three-dimensional object (2) by selectively solidifying a building material (15), preferably a powder, layer by layer, wherein the device (1) is adapted to receive the recoater (16) in a way so that it is movable across a build area (8) for applying a layer (31b, 32b) of the building material (15) within the build area (8), comprises a solidification device (20) for selectively solidifying the applied layer (31b, 32b) at positions corresponding to a cross-section of the object (2) to be manufactured, and is formed and/or controlled to repeat the steps of applying and selectively solidifying until the object (2) is completed,
wherein the recoater (16) comprises a recoating unit (40) according to one of claims 1 to 6.

8. Recoater according to claim 7, wherein the recoating unit (40) is an exchangeable recoating module.

9. Device (1) for additive manufacturing of a three-dimensional object (2) by selectively solidifying a building material (15), preferably a powder, layer by layer comprising:
a recoater (16) movable across a build area (8) for applying a layer (31b, 32b) of the building material (15) within the build area (8) and
a solidification device (20) for selectively solidifying the applied layer (31b, 32b) at positions corresponding to a cross-section of the object (2) to be manufactured,
wherein the device (1) is formed and/or controlled to repeat the steps of applying and selectively solidifying until the object (2) is completed, and
wherein the recoater (16) is formed according to one of claims 7 or 8.

10. Device (1) according to claim 9, further comprising a device for supplying building material (15) in front of the roller (41, 42) arranged ahead in the respective movement direction (B1, B2).

11. Device (1) according to claim 9 or 10, wherein the recoating unit (40) is arranged within the device (1) in a way that the first direction is the movement direction (B1) of the recoater (16) across the build area (8) and the third direction essentially is the vertical direction perpendicular to the building area (8).

12. Recoating method to be carried out in a device (1) for additive manufacturing of a three-dimensional object (2) by selectively solidifying a building material (15), preferably a powder, layer by layer, wherein the device (1) comprises a recoater (16) movable across a build area (8) for applying a layer (31b, 32b) of the building material (15) within the build area (8) and a solidification device (20) for selectively solidifying the applied layer (31b, 32b) at positions corresponding to a cross-section of the object (2) to be manufactured, and is formed and/or controlled to repeat the steps of applying and selectively solidifying until the object (2) is completed,
wherein the recoating method is carried out using a recoating unit (40) which comprises:
at least two recoating rollers (41, 42) spaced apart from each other in a first direction (B1) and extending into a second direction transversely, preferably perpendicularly, to the first direction, and
a compacting and/or smoothing element (45) arranged between the two recoating rollers (41, 42) in the first direction (B1) and extending into the second direction, and
wherein the recoating unit (40) draws-out building material to a regular layer (31a, 32a), depending on the movement of the recoating unit into the first direction (B1) or into its reverse direction (B2), using the recoating roller (41, 42) arranged ahead in the respective moving direction (B1, B2), and
the layer (31a, 32a) drawn-out by the recoating roller (41, 42) arranged ahead is compacted or smoothened using the compacting and/or smoothing element (45).

13. Method according to claim 12, wherein
a lower side of the compacting and/or smoothing element (45) facing the build area (8) is arranged closer to the build area (8) than the lower sides of the two recoating rollers (41, 42) facing the build area (8) and/or
the lower sides of the two recoating rollers (41, 42) facing the build area (8) essentially have the same distance from the build area (8).

14. Method according to claim 12 or 13, wherein the rotational direction of each of the recoating rollers (41, 42) is selected in a way that each recoating roller (41, 42), when it is the recoating roller arranged ahead in the respective movement direction (B1, B2), rotates in a contra-rotating way with regard to the respective movement direction (B1, B2).

15. Method for additive manufacturing of a three-dimensional object (2) by selectively solidifying a building material (15), preferably a powder, layer by layer, comprising the steps:
applying a layer (31b, 32b) of the building material within a build area (8) by means of a recoater (16) moving in a first direction (B1) and in its reverse direction (B2) across the build area (8),
selectively solidifying the applied layer (31b, 32b) at positions corresponding to a cross-section of the object (2) to be manufactured, by means of a solidification device (20) and
repeating the steps of applying and selectively solidifying until the object (2) is completed,
wherein for applying the layer (31b, 32b), a recoating method according to one of claims 12 to 14 is carried out.

## Revendications

1. Unité d'enduction (40) destinée à équiper initialement et/ou ultérieurement un dispositif (1) pour fabriquer un objet (2) tridimensionnel par solidification sélective par couches d'un matériau de construction (15), de préférence d'une poudre, dans laquelle le dispositif (1) contient un enducteur (16) déplaçable par-dessus un champ de construction (8) pour appliquer une couche (31b, 32b) du matériau de construction à l'intérieur du champ de construction (8) et un dispositif de solidification (20) pour une solidification sélective de la couche (31b, 32b) appliquée en des emplacements qui correspondent à une section transversale de l'objet (2) à fabriquer, et est conçu et/ou commandé pour répéter les étapes de l'application et de la solidification sélective, jusqu'à ce que l'objet (2) soit fabriqué,
dans laquelle l'unité d'enduction (40) contient :
au moins deux rouleaux d'enduction (41, 42) espacés les uns des autres dans une première direction (B1) et s'étendant dans une deuxième direction transversalement, de préférence perpendiculairement, à la première direction et
un élément d'étanchéité et/ou de lissage (45) agencé dans la première direction entre les deux rouleaux d'enduction (41, 42) et s'étendant dans la deuxième direction,
dans lequel un côté inférieur, tourné vers le champ de construction (8), de l'élément d'étanchéité et/ou de lissage (45) est agencé plus près du champ de construction (8) que des côtés inférieurs, tournés vers le champ de construction (8), des deux rouleaux d'enduction (41, 42),
dans lequel l'unité d'enduction (45) est aménagée pour :
en fonction du déplacement de l'unité d'enduction dans la première direction (B1) ou dans sa direction opposée (B2), étirer un matériau de construction en une couche (31a, 32a) uniforme avec le rouleau d'enduction (41, 42) avancé dans la direction de déplacement (B1, B2) respective et
étanchéifier et/ou lisser la couche (31a, 32a) étirée par le rouleau d'enduction (41, 42) avancé avec l'élément d'étanchéité et/ou de lissage (45).

2. Unité d'enduction (40) selon la revendication 1, dans laquelle l'élément d'étanchéité et/ou de lissage (45) est agencé dans la première direction (B1) essentiellement au milieu entre les deux rouleaux d'enduction (41, 42) et/ou
est formé dans la première direction (B1) de façon essentiellement asymétrique ou essentiellement en symétrie spéculaire.

3. Unité d'enduction (40) selon la revendication 1 ou 2, dans laquelle l'élément d'étanchéité et/ou de lissage (45) est une lame s'étendant dans la deuxième direction et dans une troisième direction se déroulant perpendiculairement à la première et à la deuxième direction, qui au niveau de son côté inférieur posé dans la troisième direction et pointant dans la direction du champ de construction présente au moins une surface d'étanchéité et/ou de lissage (46a-d) inclinée et/ou un arrondi (48a-b), de préférence sous la forme d'un segment de cylindre (49) et/ou d'un élément en forme de toit, pour étanchéifier et/ou lisser la couche (31a, 32a).

4. Unité d'enduction (40) selon l'une des revendications 1 à 3, dans laquelle l'élément d'étanchéité et/ou de lissage (45) est agencé de façon à pouvoir être échangé dans l'unité d'enduction (40).

5. Unité d'enduction (40) selon l'une des revendications 1 à 4, dans laquelle l'élément d'étanchéité et/ou de lissage (45) est agencé dans la troisième direction dans l'unité d'enduction (40) de façon à pouvoir être réglé manuellement et/ou automatiquement.

6. Unité d'enduction (40) selon l'une des revendications 1 à 5, dans laquelle
les deux rouleaux d'enduction (41, 42) présentent le même diamètre et/ou
les deux rouleaux d'enduction (41, 42) sont agencés, dans un sens de rotation opposé l'un à l'autre, dans l'unité d'enduction (40) de façon à pouvoir être entraînés.

7. Enducteur (16) destiné à équiper initialement et/ou ultérieurement un dispositif (1) pour fabriquer un objet (2) tridimensionnel par solidification sélective par couches d'un matériau de construction (15), de préférence d'une poudre, dans laquelle le dispositif (1) est adapté pour recevoir l'enducteur (16) de telle sorte qu'il soit déplaçable par-dessus un champ de construction (8) pour appliquer une couche (31b, 32b) du matériau de construction (15) à l'intérieur du champ de construction (8), contient un dispositif de solidification (20) pour une solidification sélective de la couche (31b, 32b) appliquée en des emplacements qui correspondent à une section transversale de l'objet (2) à fabriquer, et est conçu et/ou commandé pour répéter les étapes de l'application et de la solidification sélective, jusqu'à ce que l'objet (2) soit fabriqué,
dans lequel l'enducteur (16) contient une unité d'enduction (40) selon l'une des revendications 1 à 6.

8. Enducteur (16) selon la revendication 7, dans lequel l'unité d'enduction (40) est un module d'enduction échangeable.

9. Dispositif (1) destiné à fabriquer de façon générative un objet (2) tridimensionnel par solidification sélective par couches d'un matériau de construction (15), de préférence d'une poudre, comprenant :
un enducteur (16) déplaçable par-dessus un champ de construction (8) pour appliquer une couche (31b, 32b) du matériau de construction (15) à l'intérieur du champ de construction (8) et
un dispositif de solidification (20) pour une solidification sélective de la couche (31b, 32b) appliquée en des emplacements qui correspondent à une section transversale de l'objet (2) à fabriquer,
dans lequel le dispositif (1) est conçu et/ou commandé pour répéter les étapes de l'application et de la solidification sélective, jusqu'à ce que l'objet (2) soit fabriqué, et
dans lequel l'enducteur (16) est conçu selon l'une des revendications 7 à 8.

10. Dispositif selon la revendication 9, qui contient en outre un équipement pour appliquer un matériau de construction (15) dans la direction de déplacement (B1, B2) respective avant le rouleau (41, 42) avancé.

11. Dispositif selon la revendication 9 ou 10, dans lequel l'unité d'enduction (40) est agencée dans le dispositif de telle sorte que la première direction est la direction de déplacement (B1) de l'enducteur par-dessus le champ de construction (8) et la troisième direction est la verticale perpendiculaire au champ de construction (8).

12. Procédé d'enduction dans un dispositif (1) destiné à fabriquer de façon générative un objet (2) tridimensionnel par solidification sélective par couches d'un matériau de construction (15), de préférence d'une poudre, dans lequel le dispositif contient un enducteur (16) déplaçable par-dessus un champ de construction (8) pour appliquer une couche (31b, 32b) du matériau de construction (15) à l'intérieur du champ de construction (8) et un dispositif de solidification (20) pour une solidification sélective de la couche (31b, 32b) appliquée en des emplacements qui correspondent à une section transversale de l'objet (2) à fabriquer, et est conçu et/ou commandé pour répéter les étapes de l'application et de la solidification sélective, jusqu'à ce que l'objet (2) soit fabriqué,
dans lequel le procédé d'enduction se produit au moyen d'une unité d'enduction (40) qui contient :
au moins deux rouleaux d'enduction (41, 42) espacés les uns des autres dans une première direction (B1) et s'étendant dans une deuxième direction transversalement, de préférence perpendiculairement, à la première direction et
un élément d'étanchéité et/ou de lissage (45) agencé dans la première direction entre les deux rouleaux d'enduction (41, 42) et s'étendant dans la deuxième direction, et
dans lequel l'unité d'enduction (40), en fonction de son déplacement dans la première direction (B1) ou dans sa direction opposée (B2), étire un matériau de construction (15) en une couche (31a, 32a) uniforme avec le rouleau d'enduction (41, 42) avancé dans la direction de déplacement respective et
la couche (31a, 32a) étirée par le rouleau d'enduction (41, 42) avancé est étanchéifiée et/ou lissée par l'élément d'étanchéité et/ou de lissage (45).

13. Procédé selon la revendication 12, dans lequel
un côté inférieur, tourné vers le champ de construction (48), de l'élément d'étanchéité et/ou de lissage (45) est agencé plus près du champ de construction (8) que des côtés inférieurs, tournés vers le champ de construction (8), des deux rouleaux d'enduction (41, 42) et/ou
les côtés inférieurs, tournés vers le champ de construction (8), des deux rouleaux d'enduction (41, 42) sont agencés essentiellement à la même distance du champ de construction (41).

14. Procédé selon la revendication 12 ou 13, dans lequel le sens de rotation de chaque rouleau d'enduction (41, 42) est sélectionné de telle sorte que chaque rouleau d'enduction (41, 42), lorsqu'il est le rouleau d'enduction avancé dans la direction de déplacement (B1, B2) respective, soit tourné en sens contraire de la direction de déplacement (B1, B2) respective.

15. Procédé destiné à fabriquer de façon générative un objet (2) tridimensionnel par solidification sélective par couches d'un matériau de construction (15), de préférence d'une poudre, avec les étapes consistant à :
appliquer une couche (31b, 32b) du matériau de construction à l'intérieur d'un champ de construction (8) au moyen d'un enducteur (16) se déplaçant par-dessus le champ de construction (8) dans une première direction (B1) et dans sa direction opposée (B2),
solidifier de façon sélective la couche (31b, 32b) appliquée en des emplacements qui correspondent à une section transversale de l'objet (2) à fabriquer, au moyen d'un dispositif de solidification (20) et
répéter les étapes de l'application et de la solidification sélective, jusqu'à ce que l'objet (2) soit fabriqué, et
dans lequel, pour appliquer la couche (31b, 32b) est utilisé un procédé d'enduction selon l'une des revendications 12 à 14.
